(19) Europäisches Patentamt
European Patent Office
Office européen des brevets

(11) EP 4 793 397 A1

(12) **EUROPEAN PATENT APPLICATION**
published in accordance with Art. 153(4) EPC

(43) Date of publication:
**19.08.2026 Bulletin 2026/34**

(21) Application number: **24923747.0**

(22) Date of filing: **18.12.2024**

(51) International Patent Classification (IPC):
***C23C 2/06*** (2006.01) ***C22C 18/00*** (2006.01) ***C22C 18/04*** (2006.01) ***C22F 1/00*** (2006.01) ***C22F 1/16*** (2006.01) ***C23C 2/20*** (2006.01) ***C23C 2/26*** (2006.01)

(52) Cooperative Patent Classification (CPC):
**C22C 18/00; C22C 18/04; C22F 1/00; C22F 1/16; C23C 2/06; C23C 2/20; C23C 2/26**

(86) International application number:
**PCT/JP2024/044860**

(87) International publication number:
**WO 2025/169615 (14.08.2025 Gazette 2025/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2024 JP 2024016627**

(71) Applicant: **JFE Steel Corporation**
**Tokyo 100-0011 (JP)**

(72) Inventors:
- **FUJII, Norifumi**
  **Tokyo 100-0011 (JP)**
- **MAKIMIZU, Yoichi**
  **Tokyo 100-0011 (JP)**

(74) Representative: **Scott, Stephen John**
**YUJA IP LAW**
**East Coast House**
**25 Skeldergate**
**York YO1 6DH (GB)**

(54) **ZN-AL-MG-BASED PLATED STEEL SHEET**

(57) Provided is a Zn-Al-Mg coated steel sheet that exhibits excellent blistering corrosion resistance and appearance-related corrosion resistance in painted cut portions, as well as excellent lapped flat-sheet portion corrosion resistance, even in corrosion environments where temperatures fluctuate greatly from freezing and below to high temperatures. The Zn-Al-Mg coated steel sheet includes a base steel sheet and a coated layer formed on at least one side of the base steel sheet. The coated layer has a defined chemical composition. In a reflected electron image obtained by irradiating a surface of the coated layer with an electron beam using a scanning electron microscope, (I) single-phase Zn microstructures exist as islands within a matrix of Zn-Al-$MgZn_2$ ternary eutectic alloy microstructure, (II) a circle equivalent average radius $r_{ave}$ of the single-phase Zn microstructures is 6.0 μm or more and 14.0 μm or less, and (III) an average width $d_{ave}$ of the Zn-Al-$MgZn_2$ ternary eutectic alloy microstructure located between adjacent single-phase Zn microstructures is 4.0 μm or more and 6.0 μm or less.

*FIG. 1*

10
20
10 μm



Processed by Luminess, 75001 PARIS (FR)

## Description

TECHNICAL FIELD

The present disclosure relates to Zn-Al-Mg coated steel sheets.

BACKGROUND

Coated steel sheets, in which a mainly zinc coated or plated layer is formed on the surface of a base steel sheet, are used in a wide range of applications, including automobiles, home appliances, and building materials. By suppressing iron corrosion through sacrificial protection of the zinc or zinc alloy coated or plated layer, coated or plated steel sheets possess excellent corrosion resistance.

In the automotive field, hot-dip galvanized steel sheets and hot-dip galvannealed steel sheets, which are types of zinc or zinc alloy coated steel sheets, have conventionally been used. However, due to the worsening of air pollution and corrosion environments accompanying industrial advancement, the adoption of Zn-Al-Mg coated steel sheets, which offer superior corrosion resistance and longer lifespan compared to conventional zinc coating, is being considered.

For example, in Patent Literature (PTL) 1, a Zn-Al-Mg coated steel sheet is described as having a Zn-Al-$MgZn_2$ ternary eutectic alloy microstructure as the matrix, with the coated layer containing Al: 1.0 % to 3.0 % and Mg: 1.5 % to 4.0 %. It is stated that the addition of aluminum and magnesium to zinc provides high corrosion resistance, and that the low content of aluminum and magnesium makes it easy to use in automotive applications. In PTL 2, a Zn-Al-Mg coated steel sheet is described in which the initial corrosion resistance is improved compared to conventional Zn-Al-Mg coated steel sheets by controlling the microstructure of the coating. In PTL 3, a Zn-Al-Mg coated steel sheet is described that decreases blistering from post-painting cut areas by controlling the microstructure of the coating, and secures the corrosion resistance of post-painting damaged areas required for application to vehicle bodies.

CITATION LIST

Patent Literature

PTL 1: JP 2014-501334 A
PTL 2: JP 2023-074874 A
PTL 3: JP 2021-195564 A

SUMMARY

(Technical Problem)

However, the coated steel sheets described in the above-mentioned literature had a problem in that the Zn-Al-$MgZn_2$ ternary eutectic alloy microstructure in the coated microstructure corroded early in corrosion environments where the temperature fluctuated greatly from freezing and below to high temperatures (50 °C and above). Therefore, it was not possible to ensure the corrosion resistance of post-painting damaged areas and the corrosion resistance of lapped flat-sheet portions in corrosion environments with large temperature fluctuations, which are required when considering application to automobile bodies.

In view of the above, it would be helpful to provide a Zn-Al-Mg coated steel sheet that exhibits excellent blistering corrosion resistance and appearance-related corrosion resistance at painted cut portions, as well as excellent lapped flat-sheet portion corrosion resistance, even in corrosion environments where the temperature changes greatly from freezing and below to high temperatures (50 °C and above).

(Solution to Problem)

In order to solve the aforementioned problems, the inventors conducted intensive studies and made the following discoveries. On the surface of the coated layer of a Zn-Al-Mg coated steel sheet, single-phase Zn microstructures exist as islands within a matrix of Zn-Al-$MgZn_2$ ternary eutectic alloy microstructure. By controlling a circle equivalent average radius $r_{ave}$ of the single-phase Zn microstructures and an average width $d_{ave}$ of the Zn-Al-$MgZn_2$ ternary eutectic alloy microstructure located between adjacent single-phase Zn microstructures within defined ranges, it is possible to improve blistering corrosion resistance and appearance-related corrosion resistance at painted cut portions, as well as lapped flat-

sheet portion corrosion resistance, even in harsh corrosion environments with temperatures ranging from freezing and below to high temperatures (50 °C and above). Further, during the production of coated steel sheets, a mixed gas consisting of $H_2$ and $N_2$ is blown onto the coated steel sheet during gas wiping, and an average cooling rate during a cooling process until the temperature of the coated steel sheet surface reaches 200 °C after gas wiping is in a defined range, thereby obtaining the coated layer microstructure described above.

Primary features of the present disclosure are as follows.

[1] A Zn-Al-Mg coated steel sheet comprising a base steel sheet and a coated layer formed on at least one side of the base steel sheet,

wherein the coated layer has a chemical composition, in mass%, containing (consisting of) Al: 0.10 % to 3.00 %, Mg: 0.50 % to 3.00 %, and Fe: 0.30 % or less, with the balance being Zn and inevitable impurities, and wherein, in a reflected electron image obtained by irradiating a surface of the coated layer with an electron beam using a scanning electron microscope, (1) single-phase Zn microstructures exist as islands within a matrix of Zn-Al-$MgZn_2$ ternary eutectic alloy microstructure, (II) a circle equivalent average radius $r_{ave}$ of the single-phase Zn microstructures is 6.0 μm or more and 14.0 μm or less, and (III) an average width $d_{ave}$ of the Zn-Al-$MgZn_2$ ternary eutectic alloy microstructure located between adjacent single-phase Zn microstructures is 4.0 μm or more and 6.0 μm or less.

[2] The Zn-Al-Mg coated steel sheet according to [1], wherein, in the reflected electron image, the Zn-Al-$MgZn_2$ ternary eutectic alloy microstructure is 30 area% or more, and the single-phase Zn microstructure is 70 area% or less.

(Advantageous Effect)

According to the present disclosure, it is possible to provide a Zn-Al-Mg coated steel sheet that exhibits excellent blistering corrosion resistance and appearance-related corrosion resistance at painted cut portions, as well as excellent lapped flat-sheet portion corrosion resistance, even in corrosion environments where the temperature changes greatly from freezing and below to high temperatures (50 °C and above).

BRIEF DESCRIPTION OF THE DRAWINGS

In the accompanying drawings:

FIG. 1 is a reflected electron image at a magnification of 800 times obtained by irradiating a surface of the coated layer with an electron beam at an accelerating voltage of 15.0 kV for an Example (No. 1) according to an embodiment of the present disclosure;
FIG. 2 is a diagram illustrating an example of a circle equivalent radius r of a single-phase Zn microstructure in the reflected electron image of Example No. 1; and
FIG. 3 is a diagram illustrating widths d1, d2, d3, and d4 of Zn-Al-$MgZn_2$ ternary eutectic alloy microstructure located between adjacent single-phase Zn microstructures in the reflected electron image of Example No. 1.

DETAILED DESCRIPTION

The following is a description of an embodiment of the Zn-Al-Mg coated steel sheet according to the present disclosure. The embodiments described below are example embodiments of the present disclosure, and do not limit configuration to the specific examples described.

[Base steel sheet]

There is no particular limitation on the type of the base steel sheet used according to the present disclosure, and for example, a hot-rolled steel sheet or hot-rolled steel strip that has been pickled and descaled, or a cold-rolled steel sheet or cold-rolled steel strip obtained by cold rolling a hot-rolled steel sheet or hot-rolled steel strip that has been pickled and descaled may be used. There is no particular limitation on the thickness of the base steel sheet. The thickness of the base steel sheet is preferably 0.7 mm or more. The thickness of the base steel sheet is preferably 2.0 mm or less.

[Coated layer]

The following describes the composition of the Zn-Al-Mg coated layer according to the present disclosure.

When the Al content in the coated layer is less than 0.10 mass%, a sufficient area fraction (%) of the Zn-Al-$MgZn_2$ ternary eutectic alloy microstructure cannot be obtained, and a large portion of the surface of the coated layer is occupied by single-phase Zn microstructure. As a result, an average width $d_{ave}$ of the Zn-Al-$MgZn_2$ ternary eutectic alloy microstructure located between adjacent single-phase Zn microstructures becomes less than 4.0 $\mu$m, and sufficient blistering corrosion resistance and appearance-related corrosion resistance of painted cut portions, as well as lapped flat-sheet portion corrosion resistance, cannot be obtained. The Al content in the coated layer is therefore 0.10 mass% or more. The Al content in the coated layer is preferably 0.50 mass% or more. On the other hand, when the Al content in the coated layer exceeds 3.00 mass%, blistering corrosion resistance of painted cut portions cannot be obtained. Further, when the Al content exceeds 5.00 mass%, the primary crystal becomes an Al phase with Zn in solid solution, and a single-phase Zn microstructure cannot be obtained. The A1 content in the coated layer is therefore 3.00 mass% or less. The Al content in the coated layer is preferably 2.00 mass% or less.

When the Mg content in the coated layer is less than 0.50 mass%, a sufficient area fraction (%) of the Zn-Al-$MgZn_2$ ternary eutectic alloy microstructure cannot be obtained, and a large portion of the surface of the coated layer is occupied by single-phase Zn microstructure. As a result, the average width $d_{ave}$ of the Zn-Al-$MgZn_2$ ternary eutectic alloy microstructure located between adjacent single-phase Zn microstructures becomes less than 4.0 $\mu$m, resulting in insufficient improvement in blistering corrosion resistance and appearance-related corrosion resistance of painted cut portions, as well as lapped flat-sheet portion corrosion resistance. The Mg content in the coated layer is therefore 0.50 mass% or more. The Mg content in the coated layer is preferably 1.00 mass% or more. On the other hand, when the Mg content in the coated layer exceeds 3.00 mass%, the $MgZn_2$ phase increases, and the area% of the ternary eutectic alloy microstructure increases drastically. As a result, the average width $d_{ave}$ of the Zn-Al-$MgZn_2$ ternary eutectic alloy microstructure located between adjacent single-phase Zn microstructures exceeds 6.0 $\mu$m, and lapped flat-sheet portion corrosion resistance cannot be obtained. Further, when the Mg content in the coated layer exceeds 5.00 mass%, the coated layer becomes dominated by blocky $MgZn_2$ phase microstructure, and single-phase Zn microstructure cannot be obtained. The Mg content in the coated layer is therefore 3.00 mass% or less. The Mg content in the coated layer is preferably 2.50 mass% or less.

When the Fe content in the coated layer exceeds 0.30 mass%, the growth of an alloy layer formed at the interface between the base steel sheet and the coated layer increases, resulting in decreased workability. The Fe content in the coated layer is therefore 0.30 mass% or less. The Fe content in the coated layer is preferably 0.20 mass% or less. On the other hand, a lower limit of the Fe content in the coated layer is not particularly limited, and may be 0.00 mass%.

The balance of the chemical composition of the coated layer other than the above consists of Zn and inevitable impurities.

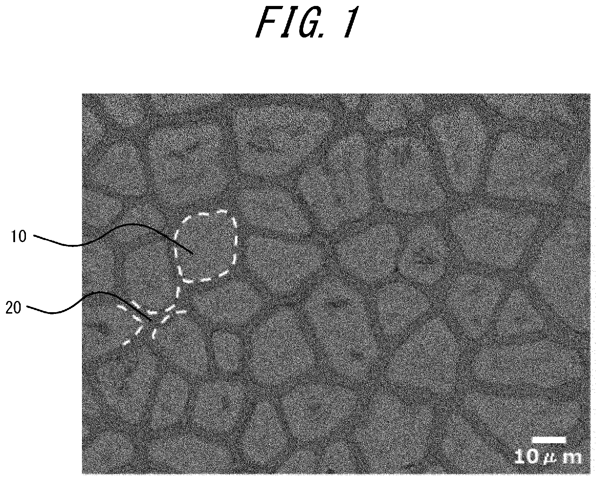

The following describes the microstructure of the Zn-Al-Mg coated layer. FIG. 1 illustrates an example of a reflected electron image obtained by irradiating the surface of the coated layer with an electron beam using a scanning electron microscope, for a Zn-Al-Mg coated steel sheet according to an embodiment of the present disclosure. As illustrated in FIG. 1, in the reflected electron image, a single-phase Zn microstructure 10 and a Zn-Al-$MgZn_2$ ternary eutectic alloy microstructure 20 with different compositional contrasts are observed, and the single-phase Zn microstructures 10 exist as islands within the matrix of the Zn-Al-$MgZn_2$ ternary eutectic alloy microstructure 20. When the Zn-Al-Mg coated layer lacks either or both of a single-phase Zn microstructure and a Zn-Al-$MgZn_2$ ternary eutectic alloy microstructure, the desired corrosion resistance cannot be obtained. Further, the microstructure of the coated layer preferably consists of single-phase Zn microstructures and Zn-Al-$MgZn_2$ ternary eutectic alloy microstructure.

The presence or absence of single-phase Zn microstructure and Zn-Al-$MgZn_2$ ternary eutectic alloy microstructure can be confirmed by combining analysis using a scanning electron microscope (SEM), an energy-dispersive X-ray spectroscopy (EDS) analyzer, and an X-ray diffraction (XRD) analyzer as follows. A sample of Zn-Al-Mg coated steel sheet is sheared to a size of 10 mm $\times$ 20 mm. The coated layer of the sheared sample is observed from the surface direction of the coated steel sheet using a scanning electron microscope (SEM), and compositional analysis is carried out by EDS and analysis by XRD. As illustrated in FIG. 1, regions having a smooth, white appearance are observed in the reflected electron image. In these regions, when only Zn is detected by compositional analysis using EDS and the $\eta$-Zn phase is confirmed by analysis using XRD, the region is judged to be a single-phase Zn microstructure. Further, as illustrated in FIG. 1, a region having a lamellar structure is observed in the reflected electron image. In this region, when EDS compositional analysis detects three elements, Zn, Al, and Mg, and XRD analysis confirms the presence of a Zn phase, an Al phase, and a $MgZn_2$ alloy phase, then the region is determined to have a Zn-Al-$MgZn_2$ ternary eutectic alloy microstructure.

In the Zn-Al-Mg coated layer, Mg dissolves out from the Zn-Al-$MgZn_2$ ternary eutectic alloy microstructure under corrosion environments. The dissolved Mg buffers the surrounding pH, thereby suppressing the pH increase associated with corrosion progression, stabilizing basic zinc chloride, the highly protective Zn-based corrosion product generated by the corrosion reaction, and improving corrosion resistance. When Mg dissolution occurs prematurely from the Zn-Al-$MgZn_2$ ternary eutectic alloy microstructure under a corrosion environment, it becomes difficult to stabilize zinc chloride over the long term, and a long-term improvement in corrosion resistance cannot be fully achieved. On the other hand, when

Mg dissolution from the Zn-Al-$MgZn_2$ ternary eutectic alloy microstructure occurs long after corrosion has started, the effect of improving corrosion resistance in the early stages of corrosion cannot be sufficiently obtained. Accordingly, in order to further improve the corrosion resistance of the Zn-Al-Mg coated layer, it is important that the Mg dissolution from the Zn-Al-$MgZn_2$ ternary eutectic alloy microstructure is sustainably-releasable.

For the Mg dissolution from the Zn-Al-$MgZn_2$ ternary eutectic alloy microstructure to be sustainably-releasable, it is important to control the size of the single-phase Zn microstructures on the coating surface and the distance between the single-phase Zn microstructures and the Zn-Al-$MgZn_2$ ternary eutectic alloy microstructure. The single-phase Zn microstructures are slightly more corrosion-resistant than the Zn-Al-$MgZn_2$ ternary eutectic alloy microstructure. Therefore, in regions where the single-phase Zn microstructures and the Zn-Al-$MgZn_2$ ternary eutectic alloy microstructure are in close proximity, the corrosion rate of the Zn-Al-$MgZn_2$ ternary eutectic alloy microstructure is somewhat suppressed. Therefore, increasing or decreasing the contact area between the Zn-Al-$MgZn_2$ ternary eutectic alloy microstructure changes the dissolution rate and dissolution amount of Mg. When the contact area is excessively large, the corrosion of the Zn-Al-$MgZn_2$ ternary eutectic alloy microstructure is greatly suppressed, Mg dissolution becomes very slow, and the effect of improving corrosion resistance in the early stages of corrosion is not sufficiently obtained. On the other hand, when the contact area is excessively decreased, the Zn-Al-$MgZn_2$ ternary eutectic alloy microstructure is preferentially corroded, leading to very rapid Mg dissolution and insufficient long-term corrosion resistance improvement.

Based on the above, it is important that the Mg dissolution from the Zn-Al-$MgZn_2$ ternary eutectic alloy microstructure is sustainably-releasable by controlling the contact area between the single-phase Zn microstructures and the Zn-Al-$MgZn_2$ ternary eutectic alloy microstructure. To achieve this, it is useful to control the arrangement of the single-phase Zn microstructures and the Zn-Al-$MgZn_2$ ternary eutectic alloy microstructure. As a result of intensive studies, the inventors have discovered that it is important to control the metallic microstructure arrangement so that the circle equivalent average radius $r_{ave}$ of the single-phase Zn microstructures is 6.0 $\mu$m or more and 14.0 $\mu$m or less, and the average width $d_{ave}$ of the Zn-Al-$MgZn_2$ ternary eutectic alloy microstructure located between adjacent single-phase Zn microstructures is 4.0 $\mu$m or more and 6.0 $\mu$m or less.

When the average radius $r_{ave}$ of the single-phase Zn microstructure is 6.0 $\mu$m or more in a reflected electron image obtained by irradiating the surface of the coated layer with an electron beam using a scanning electron microscope, then the blistering corrosion resistance and appearance-related corrosion resistance of painted cut portions, as well as the lapped flat-sheet portion corrosion resistance, can be improved even in corrosion environments where the temperature changes greatly from freezing and below to high temperatures (50 °C and above). The circle equivalent average radius $r_{ave}$ is therefore 6.0 $\mu$m or more. The circle equivalent average radius $r_{ave}$ is preferably 9.0 $\mu$m or more. Similarly, when the circle equivalent average radius $r_{ave}$ of the single-phase Zn microstructure is 14.0 $\mu$m or less, the blistering corrosion resistance and appearance-related corrosion resistance of painted cut portions, as well as the lapped flat-sheet portion corrosion resistance, can be improved even in harsh corrosion environments where the temperature fluctuates greatly from freezing and below to high temperatures (50 °C and above). The circle equivalent average radius $r_{ave}$ is therefore 14.0 $\mu$m or less. The circle equivalent average radius $r_{ave}$ is preferably 12.0 $\mu$m or less.

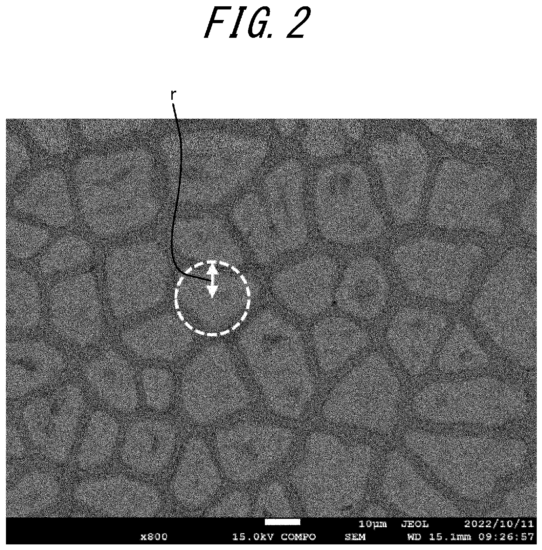

The circle equivalent average radius $r_{ave}$ of the single-phase Zn microstructure can be measured as follows. Using a scanning electron microscope, three randomly selected locations on the surface of the coated layer are observed at an accelerating voltage of 15.0 kV and a magnification of 800 times. Here, the circle equivalent radius r of a single-phase Zn microstructure is the radius r of a circle having the same area as the single-phase Zn microstructure, as illustrated in FIG. 2. Using general-purpose image processing software (for example, Image-J), the obtained reflected electron images are binarized, and an area S of each single-phase Zn microstructure that is completely contained within the observed field of view is measured. Using the obtained area S, the circle equivalent radius r of each single-phase Zn microstructure is determined by the following expression (1). The average value of r across the three observed fields of view is defined as the circle equivalent average radius of the single-phase Zn microstructure.

$$r = (S/\pi)^{1/2} \qquad \ldots(1)$$

In a reflected electron image obtained by irradiating the surface of the coated layer with an electron beam using a scanning electron microscope, when the average width $d_{ave}$ of the Zn-Al-$MgZn_2$ ternary eutectic alloy microstructure located between adjacent single-phase Zn microstructures is 4.0 $\mu$m or more, then the blistering corrosion resistance and appearance-related corrosion resistance of painted cut portions, as well as the lapped flat-sheet portion corrosion resistance, can be improved even in harsh corrosion environments where the temperature changes greatly from freezing and below to high temperatures (50 °C and above). The average width $d_{ave}$ of the Zn-Al-$MgZn_2$ ternary eutectic alloy microstructure is therefore 4.0 $\mu$m or more. The average width $d_{ave}$ of the Zn-Al-$MgZn_2$ ternary eutectic alloy microstructure is preferably 4.5 $\mu$m or more. Similarly, when the average width $d_{ave}$ of the Zn-Al-$MgZn_2$ ternary eutectic alloy microstructure is 6.0 $\mu$m or less, the blistering corrosion resistance and appearance-related corrosion resistance of painted cut portions, as well as the lapped flat-sheet portion corrosion resistance, can be improved even in harsh corrosion

environments where the temperature fluctuates greatly from freezing and below to high temperatures (50 °C and above). The average width $d_{ave}$ of the Zn-Al-$MgZn_2$ ternary eutectic alloy microstructure is therefore 6.0 μm or less. The average width $d_{ave}$ of the Zn-Al-$MgZn_2$ ternary eutectic alloy microstructure is preferably 5.5 μm or less.

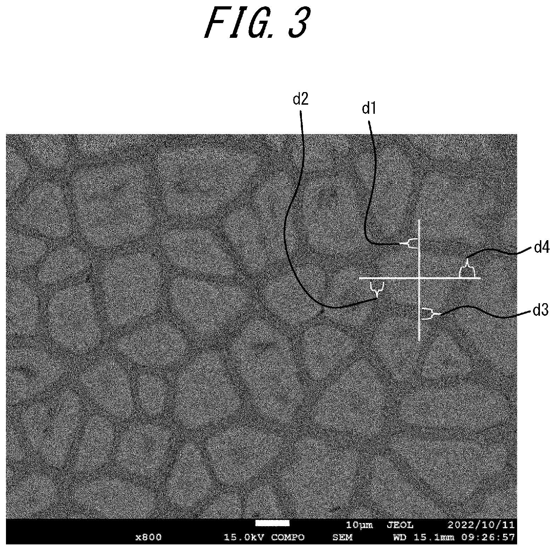

The average width $d_{ave}$ of the Zn-Al-$MgZn_2$ ternary eutectic alloy microstructure located between adjacent single-phase Zn microstructures can be measured as follows. Using a scanning electron microscope, three randomly selected locations on the surface of the coated layer are observed at an accelerating voltage of 15.0 kV and a magnification of 800 times. As illustrated in FIG. 3, a single-phase Zn microstructure that is completely contained within an observation field is selected using general-purpose image processing software (for example, Image-J), and straight lines are drawn horizontally and vertically within the observation field, with the centroid of the single-phase Zn microstructure as the intersection point. Let d1 be a distance between a grain boundary of the single-phase Zn microstructure and a grain boundary of the other single-phase Zn microstructure closest to thereto, along a straight line vertically upward from the centroid, that is, a width of the Zn-Al-$MgZn_2$ ternary eutectic alloy microstructure surrounding the single-phase Zn microstructure. Similarly, let d2 be a width of the Zn-Al-$MgZn_2$ ternary eutectic alloy microstructure along a straight line horizontally to the left of the centroid, let d3 be a width of the Zn-Al-$MgZn_2$ ternary eutectic alloy microstructure along a straight line vertically downward from the centroid, and let d4 be a width of the Zn-Al-$MgZn_2$ ternary eutectic alloy microstructure along a straight line horizontally to the right of the centroid. Measure distances d1 to d4 and determine the average value. When one or more of d1 to d4 cannot be measured for reasons such as the single-phase Zn microstructure being located at the edge of the observation field, rotate the lines drawn horizontally and vertically clockwise, and when all of d1 to d4 become measurable on the rotated lines, carry out the measurements in the same manner. If, even when a straight line drawn in the horizontal and vertical directions is rotated, one or more of d1 to d4 cannot be measured, the single-phase Zn microstructure is excluded from measurement. Measurements are carried out similarly for all single-phase Zn microstructures that are completely contained within the observation field and are a target of measurement. The average value of the measurement results in the three imaged fields of view is defined as the average width $d_{ave}$ of the Zn-Al-$MgZn_2$ ternary eutectic alloy microstructure located between adjacent single-phase Zn microstructures.

In reflected electron images obtained by irradiating the surface of the coated layer with an electron beam using a scanning electron microscope, when the Zn-Al-$MgZn_2$ ternary eutectic alloy microstructure accounts for 30 area% or more and the single-phase Zn microstructure accounts for 70 area% or less, the generation of red rust from painted cut portions can be significantly suppressed, and the appearance-related corrosion resistance of painted cut portions can be further improved. When the area fractions of the Zn-Al-$MgZn_2$ ternary eutectic alloy microstructure and the single-phase Zn microstructure are in the above ranges, a sufficient amount of basic zinc chloride and sufficient Mg dissolution to stabilize the basic zinc chloride are produced during corrosion. The Zn-Al-$MgZn_2$ ternary eutectic alloy microstructure more preferably accounts for 40 area% or more. The single-phase Zn microstructure more preferably accounts for 60 area% or less. Further, the Zn-Al-$MgZn_2$ ternary eutectic alloy microstructure preferably accounts for 50 area% or less. Further, the single-phase Zn microstructure preferably accounts for 40 area% or more.

The area fractions of the single-phase Zn microstructure and the Zn-Al-$MgZn_2$ ternary eutectic alloy microstructure can be measured as follows. Using a scanning electron microscope, three randomly selected locations on the surface of the coated layer are observed at an accelerating voltage of 15.0 kV and a magnification of 800 times. Using general-purpose image processing software (for example, Image-J), each obtained reflected electron image is binarized to clearly separate the single-phase Zn microstructure, and the area Z of the single-phase Zn microstructure is measured. The total area T of the reflected electron image is determined, and the area fraction A (%) of the single-phase Zn microstructure is calculated using the following expression (2). The area fraction B (%) of the Zn-Al-$MgZn_2$ ternary eutectic alloy microstructure is calculated using the following expression (3). For A and B, determine the average values of the three observed fields and use them as the area fraction of the single-phase Zn microstructure and the Zn-Al-$MgZn_2$ ternary eutectic alloy microstructure, respectively.

$$A = (Z/T) \times 100 \qquad \ldots(2)$$

$$B = 100 - A \qquad \ldots(3)$$

[Method of producing Zn-Al-Mg coated steel sheet]

The following describes a method of producing a Zn-Al-Mg coated steel sheet according to an embodiment of the present disclosure. An example of a method of producing a Zn-Al-Mg coated steel sheet includes: a process of preparing a base steel sheet; an optional process of carrying out annealing heat treatment on the base steel sheet; a process of immersing the base steel sheet in a coating bath having a composition, in mass%, of Al: 0.10 % to 3.00 %, Mg: 0.50 % to 3.00 %, and Fe: 0.30 % or less, with the balance being Zn and inevitable impurities, to carry out coating treatment on the

base steel sheet and produce a coated steel sheet; a process of carrying out gas wiping on the coated steel sheet to adjust the coating weight to produce a post-adjustment coated steel sheet; and a process of cooling the post-adjustment coated steel sheet. Further, in the gas wiping, a mixed gas consisting of $H_2$ and $N_2$ is blown onto the coated steel sheet, and in the cooling process after the gas wiping until a surface temperature of the coated steel sheet reaches 200 °C, the average cooling rate is 3.0 °C/s or more and 8.0 °C/s or less.

The type and thickness of the base steel sheet are as described above. When carrying out annealing heat treatment on the base steel sheet, the furnace atmosphere during annealing needs to be a reducing atmosphere, and the furnace atmosphere during annealing preferably contains $H_2$, with the balance being $N_2$ from the viewpoint of production costs. When the $H_2$ concentration in the furnace atmosphere is 1 vol% or more, oxides on the steel sheet surface can be suitably reduced. The $H_2$ concentration in the furnace atmosphere during annealing is therefore preferably 1 vol% or more. On the other hand, when the $H_2$ concentration in the furnace atmosphere during annealing is 10 vol% or less, production costs can be suitably controlled. The $H_2$ concentration in the furnace atmosphere during annealing is therefore preferably 10 vol% or less. Temperature of the annealing heat treatment is not particularly limited. The temperature of the annealing heat treatment is preferably 600 °C or more. The temperature of the annealing heat treatment is preferably 850 °C or less. Further, duration of the annealing heat treatment is not particularly limited. The duration of the annealing heat treatment is preferably 10 s or longer. The duration of the annealing heat treatment is preferably 60 s or less.

The coating bath used in production of the Zn-Al-Mg coated steel sheet has a composition, in mass%, consisting of Al: 0.10 % to 3.00 %, Mg: 0.50 % to 3.00 %, and Fe: 0.30 % or less, with the balance being Zn and inevitable impurities. The explanation for each component in the coating bath is the same as the explanation for each component of the coated layer described above. The chemical composition of the coating bath is equivalent to the chemical composition of the coated layer.

When the temperature of the coating bath during the coating treatment is 430 °C or higher, the flowability of the coating bath can be suitably obtained, and the coating weight can be made suitably uniform. The temperature of the coating bath is therefore preferably 430 °C or higher. The temperature of the coating bath is more preferably 450 °C or higher. On the other hand, by keeping the temperature of the coating bath at 520 °C or lower, an increase in oxides on the surface of the coating bath due to Mg oxidation in the coating bath, as well as erosion of refractory material of the coating bath by Al and Mg, can be effectively suppressed. The temperature of the coating bath is therefore preferably 520 °C or lower. The temperature of the coating bath is more preferably 500 °C or lower. The temperature of the coating bath is even more preferably 490 °C or lower.

In the method of producing a Zn-Al-Mg coated steel sheet according to an embodiment of the present disclosure, the gas composition during the gas wiping to adjust the coating weight on the coated steel sheet obtained after immersion in the coating bath, and the conditions of the subsequent cooling process are important. The atmosphere during the gas wiping can be air. Further, the method of cooling the post-adjustment coated steel sheet is not particularly limited, and various methods such as air cooling, steam-water cooling, and water cooling can be applied.

According to the present disclosure, it is important that the wiping gas used during the gas wiping is a reducing gas. The gas wiping is therefore carried out by spraying a mixed gas of $H_2$ and $N_2$ onto the steel sheet. Conventionally, in the production of hot-dip galvanized steel sheets, air or $N_2$ gas has been used as a wiping gas from the viewpoint of economy. However, according to the present disclosure, it is important to sufficiently form a ternary eutectic alloy microstructure on the surface of the coated layer by using small amounts of Al and Mg present in the coating bath composition. Mg is an easily oxidizable element, and when the wiping gas contains $O_2$, the Mg is oxidized during gas wiping. As a result, the amount of Mg becomes insufficient during the subsequent cooling process, preventing the formation of sufficient Zn-Al-$MgZn_2$ ternary eutectic alloy microstructure. When the formation of Zn-Al-$MgZn_2$ ternary eutectic alloy microstructure is insufficient on the surface of the coated layer, single-phase Zn microstructure occupies a large portion of the surface instead, and the average width $d_{ave}$ of the Zn-Al-$MgZn_2$ ternary eutectic alloy microstructure located between adjacent single-phase Zn microstructures is decreased. As a result, the contact area between the single-phase Zn microstructure and the Zn-Al-$MgZn_2$ ternary eutectic alloy microstructure decreases, leading to significant preferential corrosion of the Zn-Al-$MgZn_2$ ternary eutectic alloy microstructure, resulting in very rapid Mg dissolution and a loss of long-term corrosion resistance improvement.

The inventors have intensively studied how to improve the corrosion resistance of Zn-Al-Mg coated steel sheets and have found that the higher the $H_2$ concentration of the wiping gas, the more the oxidation of Mg during gas wiping can be suppressed. This secures sufficient spacing between the single-phase Zn microstructure and the Zn-Al-$MgZn_2$ ternary eutectic alloy microstructure, allowing corrosion of the Zn-Al-$MgZn_2$ ternary eutectic alloy microstructure and sustained release of Mg dissolution.

When the $H_2$ concentration of the wiping gas is 1 vol% or more, the oxidation of molten Mg can be effectively suppressed, and a sufficient contribution to improving corrosion resistance can be obtained. The $H_2$ concentration of the wiping gas is therefore 1 vol% or more. While a greater $H_2$ concentration in the wiping gas can suppress the oxidation of molten Mg, the $H_2$ concentration of the wiping gas is preferably 5 vol% or less, from the viewpoint of production costs and economic efficiency. The $H_2$ concentration of the wiping gas is more preferably 4 vol% or less. The balance of the wiping

gas is preferably $N_2$.

The following describes the cooling process after adjusting the coating weight by gas wiping. Immediately after the gas wiping, the surface temperature of the post-adjustment coated steel sheet is approximately 450 °C. The post-adjustment coated steel sheet is cooled at an average cooling rate of 3.0 °C/s to 8.0 °C/s until the surface temperature reaches 200 °C. When the average cooling rate is less than 3.0 °C/s, the single-phase Zn microstructure becomes coarser, and the circle equivalent average radius $r_{ave}$ of the single-phase Zn microstructure and the average width $d_{ave}$ of the Zn-Al-$MgZn_2$ ternary eutectic alloy microstructure located between adjacent single-phase Zn microstructures cannot be kept within the above-mentioned ranges. Therefore, in the cooling process, the average cooling rate until the post-adjustment coated steel sheet surface temperature reaches 200 °C is 3.0 °C/s or more. Further, when the average cooling rate exceeds 8.0 °C/s, the single-phase Zn microstructures becomes smaller, and the circle equivalent average radius $r_{ave}$ of the single-phase Zn microstructure and the average width $d_{ave}$ of the Zn-Al-$MgZn_2$ ternary eutectic alloy microstructure located between adjacent single-phase Zn microstructures cannot be kept within the above-mentioned ranges. Therefore, in the cooling process, the average cooling rate until the post-adjustment coated steel sheet surface temperature reaches 200 °C is 8.0 °C/s or less.

For processes and conditions not described in the present disclosure, conventional methods can be used.

EXAMPLES

Using an ultra-low-carbon cold-rolled steel sheet having a thickness of 0.8 mm as a base steel sheet, all of the Zn-Al-Mg coated steel sheets serving as samples were produced using a hot-dip coating line. By varying the composition of the coating bath, coated steel sheets were obtained by applying hot-dip coating for one second to the base steel sheets. The coating bath temperature was 460 °C, which is 20 °C higher than the solidification start temperature estimated from the Zn-Al-Mg phase equilibrium diagram. Further, for each example, the base steel sheet was heated in an $N_2$ + $H_2$ (5 vol%) atmosphere before coating to bring the temperature of the base steel sheet to the same temperature as the coating bath when immersed in the coating bath. Subsequently, the coated steel sheet was subjected to gas wiping, and the thickness of the coated layer was adjusted to 7 $\mu$m (equivalent to a coating weight of 50 $g/m^2$) by adjusting the flow rate of the wiping gas. The gas wiping was carried out in an air environment. After the gas wiping, the post-adjustment coated steel sheet was cooled while controlling the average cooling rate until the surface temperature reached 200 °C. Table 1 lists the coating bath composition, the wiping gas composition, the coated layer composition, and the average cooling rate for each example.

Using the method described above, the presence or absence of single-phase Zn microstructure and Zn-Al-$MgZn_2$ ternary eutectic alloy microstructure was checked for each sample. For each example, "yes" is indicated in Table 1 when the microstructure was confirmed, and "no" is indicated when not confirmed. Further, using the method described above, the circle equivalent average radius $r_{ave}$ of the single-phase Zn microstructure on the coated surface of each sample, the average width $d_{ave}$ of the Zn-Al-$MgZn_2$ ternary eutectic alloy microstructure located between adjacent single-phase Zn microstructures, and the area fractions of the Zn-Al-$MgZn_2$ ternary eutectic alloy microstructure and the single-phase Zn microstructure were measured, and the results are listed in Table 1.

[Corrosion resistance of painted cut portions]

Next, in order to evaluate the blistering corrosion resistance and appearance-related corrosion resistance of painted cut portions of the Zn-Al-Mg coated steel sheets, each sample was sheared to a size of 70 mm × 80 mm. Subsequently, each sample was treated with phosphate in a pH 4, 35 °C bath primarily composed of PB-SX35, and then subjected to electrodeposition coating with a 15 $\mu$m layer of epoxy-based waterborne paint. After painting, cross-shaped cut marks were made on the sample surface using a blade. At this time, the depth of the blade was enough to reach the surface of the base steel sheet. To evaluate the post-painting corrosion resistance, an N-VDA corrosion test (VDA 233-102) was carried out. The N-VDA corrosion test is a wet-dry cycle test that simulates atmospheric corrosion in a temperature range of -15 °C to 50 °C. Compared to a normal wet-dry cycle test (for example, the SAE J2334 test repeats wetting and drying in a temperature range from room temperature to about 60 °C), this corrosion test involves a much larger temperature range from freezing and below to a high temperature (50 °C). In the N-VDA corrosion test, one cycle consists of a week of carrying out a defined temperature and humidity control pattern according to standard numbers. After 18 cycles of the N-VDA corrosion test (VDA 233-102), the blistering corrosion resistance and appearance-related corrosion resistance of painted cut portions were evaluated.

The blistering corrosion resistance of painted cut portions was evaluated by measuring the width of blisters from the cross-shaped cut area on the painted surface, and the maximum blister width was used for evaluation. Table 1 indicates the following: "◎" when the maximum blister width was less than 3 mm, "○" when 3 mm or more but less than 4 mm, "△" when 4 mm or more but less than 5 mm, and "×" when 5 mm or more. A result of "◎" or "○ " was considered a pass, while a result of "△" or "×" was considered a fail.

The appearance-related corrosion resistance of painted cut portions was evaluated by measuring the area of red rust formation from photographs of the samples after testing. Table 1 indicates the area of red rust in the cut portion as follows: "◎" when less than 50 $mm^2$, "○" when 50 $mm^2$ or more but less than 150 $mm^2$, "△" when 150 $mm^2$ or more but less than 300 $mm^2$, and "×" when 300 $mm^2$ or more. A result of "◎" or "O" was considered a pass, while a result of "△" or "×" was considered a fail.

[Lapped flat-sheet portion corrosion resistance]

To evaluate the lapped flat-sheet portion corrosion resistance of the Zn-Al-Mg coated steel sheets, each sample was sheared into a large sheet size of 80 mm × 70 mm and a small sheet size of 60 mm × 40 mm. Large and small sheets of the same coating were joined together so that their long and short sides were aligned, and then spot-welded at two points to create samples for lapped corrosion testing. Subsequently, each sample was treated with phosphate in a pH 4, 35 °C bath primarily composed of PB-SX35, and then subjected to electrodeposition coating with a 15 μm layer of epoxy-based waterborne paint. For each sample, the end faces of the large sheet, the back surface opposite the lapped surface of the large sheet, and the back surface opposite the lapped surface of the small sheet were covered with tape seals to prevent corrosion from progressing in areas other than the lapped portion. Subsequently, an N-VDA corrosion test (VDA 233-102) was carried out on the samples. After 24 cycles of corrosion testing, the spot welds were separated, the chemical conversion and electrodeposition coating on the large sheet side was removed, and the corrosion products on the lapped portion were stripped with hydrochloric acid. The maximum corrosion depth of the tested sample was then measured using a laser device.

Table 1 indicates the following: "◎" when the maximum corrosion depth was less than 0.3 mm, "○" when 0.3 mm or more but less than 0.4 mm, "△" when 0.4 mm or more but less than 0.5 mm, and "×" when 0.5 mm or more. A result of "◎" or "○" was considered a pass, while a result of "△" or "×" was considered a fail.

[Table 1]

Table 1

| No. | Coating bath composition (mass%) | | | | Wiping gas | Average cooling rate (°C/s) | Coated layer composition (mass%) | | | | Single-phase Zn micro-structure | Ternary eutectic alloy micro-structure | Circle equivalent average radius of single-phase Zn micro-structure $r_{ave}$ (μm) | Average width of ternary eutectic alloy micro-structure $d_{ave}$ (μm) | Area fraction of ternary eutectic alloy micro-structure (%) | Area fraction of single-phase Zn micro-structure (%) | Evaluation results in environment ranging from freezing and below to high temperatures (50 °C and above) | | | Classification |
|---|---|---|---|---|---|---|---|---|---|---|---|---|---|---|---|---|---|---|---|---|
| | Zn | Al | Mg | Fe | | | Zn | Al | Mg | Fe | | | | | | | Blistering corrosion resistance of painted cut portion | Appearance-related corrosion resistance of painted cut portion | Lapped flat-sheet portion corrosion resistance | |
| 1 | 97.40 | 1.50 | 1.00 | 0.10 | $N_2$+5%$H_2$ | 4.0 | 97.40 | 1.50 | 1.00 | 0.10 | yes | yes | 10.0 | 5.2 | 35 | 65 | ◎ | ◎ | ◎ | Example |
| 2 | 97.10 | 1.80 | 1.00 | 0.10 | $N_2$+5%$H_2$ | 4.0 | 97.10 | 1.80 | 1.00 | 0.10 | yes | yes | 10.0 | 5.6 | 37 | 63 | ◎ | ◎ | ◎ | Example |
| 3 | 96.90 | 2.00 | 1.00 | 0.10 | $N_2$+5%$H_2$ | 4.0 | 96.90 | 2.00 | 1.00 | 0.10 | yes | yes | 10.0 | 5.8 | 39 | 61 | ○ | ◎ | ◎ | Example |
| 4 | 97.90 | 1.00 | 1.00 | 0.10 | $N_2$+5%$H_2$ | 4.0 | 97.90 | 1.00 | 1.00 | 0.10 | yes | yes | 10.0 | 5.0 | 33 | 67 | ◎ | ◎ | ◎ | Example |
| 5 | 98.10 | 0.80 | 1.00 | 0.10 | $N_2$+5%$H_2$ | 4.0 | 98.10 | 0.80 | 1.00 | 0.10 | yes | yes | 10.0 | 4.8 | 31 | 69 | ○ | ◎ | ○ | Example |
| 6 | 98.75 | 0.15 | 1.00 | 0.10 | $N_2$+5%$H_2$ | 4.0 | 98.75 | 0.15 | 1.00 | 0.10 | yes | yes | 10.0 | 4.5 | 30 | 70 | ○ | ◎ | ○ | Example |
| 7 | 95.95 | 2.95 | 1.00 | 0.10 | $N_2$+5%$H_2$ | 4.0 | 95.95 | 2.95 | 1.00 | 0.10 | yes | yes | 6.0 | 5.9 | 40 | 60 | ○ | ◎ | ◎ | Example |
| 8 | 97.60 | 1.50 | 0.80 | 0.10 | $N_2$+5%$H_2$ | 4.0 | 97.60 | 1.50 | 0.80 | 0.10 | yes | yes | 10.0 | 5.0 | 33 | 67 | ◎ | ◎ | ◎ | Example |
| 9 | 97.80 | 1.50 | 0.60 | 0.10 | $N_2$+5%$H_2$ | 4.0 | 97.80 | 1.50 | 0.60 | 0.10 | yes | yes | 10.0 | 4.5 | 30 | 70 | ○ | ◎ | ○ | Example |
| 10 | 96.90 | 1.50 | 1.50 | 0.10 | $N_2$+5%$H_2$ | 4.0 | 96.90 | 1.50 | 1.50 | 0.10 | yes | yes | 10.0 | 5.5 | 36 | 64 | ◎ | ◎ | ◎ | Example |
| 11 | 96.10 | 1.50 | 2.30 | 0.10 | $N_2$+5%$H_2$ | 4.0 | 96.10 | 1.50 | 2.30 | 0.10 | yes | yes | 10.0 | 5.8 | 39 | 61 | ◎ | ◎ | ◎ | Example |
| 12 | 97.85 | 1.50 | 0.55 | 0.10 | $N_2$+5%$H_2$ | 4.0 | 97.85 | 1.50 | 0.55 | 0.10 | yes | yes | 10.0 | 4.1 | 24 | 76 | ◎ | ○ | ○ | Example |
| 13 | 95.50 | 1.50 | 2.90 | 0.10 | $N_2$+5%$H_2$ | 4.0 | 95.50 | 1.50 | 2.90 | 0.10 | yes | yes | 10.0 | 6.0 | 47 | 53 | ◎ | ◎ | ◎ | Example |
| 14 | 97.40 | 1.50 | 1.00 | 0.10 | $N_2$+5%$H_2$ | 5.5 | 97.40 | 1.50 | 1.00 | 0.10 | yes | yes | 7.5 | 4.6 | 28 | 72 | ◎ | ○ | ○ | Example |
| 15 | 97.40 | 1.50 | 1.00 | 0.10 | $N_2$+5%$H_2$ | 3.3 | 97.40 | 1.50 | 1.00 | 0.10 | yes | yes | 12.0 | 5.9 | 45 | 55 | ◎ | ◎ | ◎ | Example |
| 16 | 97.40 | 1.50 | 1.00 | 0.10 | $N_2$+5%$H_2$ | 7.5 | 97.40 | 1.50 | 1.00 | 0.10 | yes | yes | 6.0 | 4.3 | 26 | 74 | ◎ | ○ | ○ | Example |
| 17 | 97.40 | 1.50 | 1.00 | 0.10 | N+4%$H_2$ | 4.0 | 97.40 | 1.50 | 1.00 | 0.10 | yes | yes | 10.0 | 5.0 | 32 | 68 | ◎ | ◎ | ◎ | Example |
| 18 | 97.40 | 1.50 | 1.00 | 0.10 | $N_2$+3%$H_2$ | 4.0 | 97.40 | 1.50 | 1.00 | 0.10 | yes | yes | 11.0 | 4.5 | 29 | 71 | ◎ | ○ | ○ | Example |
| 19 | 97.40 | 1.50 | 1.00 | 0.10 | $N_2$+1%$H_2$ | 4.0 | 97.40 | 1.50 | 1.00 | 0.10 | yes | yes | 12.0 | 4.1 | 24 | 76 | ◎ | ○ | ○ | Example |
| 20 | 97.40 | 1.50 | 1.00 | 0.10 | $N_2$ | 4.0 | 97.40 | 1.50 | 1.00 | 0.10 | yes | yes | 14.5 | 3.1 | 20 | 80 | △ | × | × | Comparative Example |
| 21 | 97.40 | 1.50 | 1.00 | 0.10 | air | 4.0 | 97.40 | 1.50 | 1.00 | 0.10 | yes | yes | 18.0 | 2.5 | 5 | 95 | × | × | × | Comparative Example |
| 22 | 97.40 | 1.50 | 1.00 | 0.10 | $N_2$ | 2.5 | 97.40 | 1.50 | 1.00 | 0.10 | yes | yes | 16.0 | 3.2 | 10 | 90 | × | × | × | Comparative Example |
| 23 | 95.95 | 2.95 | 1.00 | 0.10 | $N_2$ | 4.0 | 95.95 | 2.95 | 1.00 | 0.10 | yes | yes | 13.0 | 3.4 | 30 | 70 | × | △ | × | Comparative Example |
| 24 | 95.95 | 2.95 | 1.00 | 0.10 | $N_2$ | 2.5 | 95.95 | 2.95 | 1.00 | 0.10 | yes | yes | 15.5 | 3.7 | 23 | 77 | × | × | × | Comparative Example |

Underlined: indicates value outside scope of present disclosure.

Table 1 (cont'd)

| No. | Coating bath composition (mass%) | | | | Wiping gas | Average cooling rate (°C/s) | Coated layer composition (mass%) | | | | Single-phase Zn micro-structure | Ternary eutectic alloy micro-structure | Circle equivalent average radius of single-phase Zn micro-structure $r_{ave}$ (μm) | Average width of ternary eutectic alloy micro-structure $d_{ave}$ (μm) | Area fraction of ternary eutectic alloy micro-structure (%) | Area fraction of single-phase Zn micro-structure (%) | Evaluation results in environment ranging from freezing and below to high temperatures (50 °C and above) | | | Classification |
|---|---|---|---|---|---|---|---|---|---|---|---|---|---|---|---|---|---|---|---|---|
| | Zn | Al | Mg | Fe | | | Zn | Al | Mg | Fe | | | | | | | Blistering corrosion resistance of painted cut portion | Appearance-related corrosion resistance of painted cut portion | Lapped flat-sheet portion corrosion resistance | |
| 25 | 97.40 | 1.50 | 1.00 | 0.10 | $N_2$+5%$H_2$ | 9.5 | 97.40 | 1.50 | 1.00 | 0.10 | yes | yes | 5.5 | 3.4 | 15 | 85 | △ | × | × | Comparative Example |
| 26 | 97.40 | 1.50 | 1.00 | 0.10 | $N_2$+5%$H_2$ | 17.0 | 97.40 | 1.50 | 1.00 | 0.10 | yes | yes | 4.0 | 2.9 | 10 | 90 | △ | × | × | Comparative Example |
| 27 | 97.40 | 1.50 | 1.00 | 0.10 | $N_2$+5%$H_2$ | 2.8 | 97.40 | 1.50 | 1.00 | 0.10 | yes | yes | 13.5 | 6.6 | 51 | 49 | × | △ | △ | Comparative Example |
| 28 | 97.40 | 1.50 | 1.00 | 0.10 | $N_2$+5%$H_2$ | 2.5 | 97.40 | 1.50 | 1.00 | 0.10 | yes | yes | 14.0 | 6.8 | 53 | 47 | × | △ | × | Comparative Example |
| 29 | 97.40 | 1.50 | 1.00 | 0.10 | $N_2$+5%$H_2$ | 4.2 | 97.40 | 1.50 | 1.00 | 0.10 | yes | yes | 9.8 | 5.1 | 34 | 66 | ◎ | ◎ | ◎ | Example |
| 30 | 97.40 | 1.50 | 1.00 | 0.10 | $N_2$+5%$H_2$ | 3.8 | 97.40 | 1.50 | 1.00 | 0.10 | yes | yes | 10.3 | 5.3 | 35 | 65 | ◎ | ◎ | ◎ | Example |
| 31 | 97.70 | 1.20 | 1.00 | 0.10 | $N_2$+5%$H_2$ | 3.5 | 97.70 | 1.20 | 1.00 | 0.10 | yes | yes | 10.5 | 5.6 | 38 | 62 | ◎ | ◎ | ◎ | Example |
| 32 | 97.60 | 1.50 | 0.80 | 0.10 | $N_2$+5%$H_2$ | 3.2 | 97.60 | 1.50 | 0.80 | 0.10 | yes | yes | 12.5 | 5.9 | 48 | 52 | ◎ | ◎ | ◎ | Example |
| 33 | 96.40 | 2.50 | 1.00 | 0.10 | $N_2$+5%$H_2$ | 6.0 | 96.40 | 2.50 | 1.00 | 0.10 | yes | yes | 7.0 | 4.9 | 25 | 75 | ○ | ○ | ○ | Example |
| 34 | 96.20 | 2.00 | 1.70 | 0.10 | $N_2$+5%$H_2$ | 7.5 | 96.20 | 2.00 | 1.70 | 0.10 | yes | yes | 6.0 | 5.6 | 34 | 66 | ○ | ◎ | ◎ | Example |
| 35 | 98.60 | 0.60 | 0.70 | 0.10 | $N_2$+5%$H_2$ | 2.8 | 98.60 | 0.60 | 0.70 | 0.10 | yes | yes | 15.5 | 6.1 | 39 | 61 | × | △ | △ | Comparative Example |
| 36 | 98.83 | 0.07 | 1.00 | 0.10 | $N_2$+5%$H_2$ | 4.0 | 98.83 | 0.07 | 1.00 | 0.10 | yes | yes | 11.0 | 3.0 | 12 | 88 | × | × | × | Comparative Example |
| 37 | 98.83 | 0.07 | 1.00 | 0.10 | $N_2$+5%$H_2$ | 2.5 | 98.83 | 0.07 | 1.00 | 0.10 | yes | yes | 14.5 | 3.8 | 23 | 77 | △ | △ | △ | Comparative Example |
| 38 | 95.95 | 2.95 | 1.00 | 0.10 | $N_2$+5%$H_2$ | 4.0 | 95.95 | 2.95 | 1.00 | 0.10 | yes | yes | 10.0 | 6.0 | 47 | 53 | ○ | ◎ | ◎ | Example |
| 39 | 95.65 | 3.25 | 1.00 | 0.10 | $N_2$+5%$H_2$ | 9.5 | 95.65 | 3.25 | 1.00 | 0.10 | yes | yes | 4.2 | 6.0 | 41 | 59 | × | △ | ◎ | Comparative Example |
| 40 | 93.80 | 5.10 | 1.00 | 0.10 | $N_2$+5%$H_2$ | 4.0 | 93.80 | 5.10 | 1.00 | 0.10 | no | yes | - | - | - | - | × | × | × | Comparative Example |
| 41 | 93.80 | 5.10 | 1.00 | 0.10 | $N_2$+5%$H_2$ | 9.5 | 93.80 | 5.10 | 1.00 | 0.10 | no | yes | - | - | - | - | × | × | × | Comparative Example |
| 42 | 98.10 | 1.50 | 0.30 | 0.10 | $N_2$+5%$H_2$ | 4.0 | 98.10 | 1.50 | 0.30 | 0.10 | yes | yes | 10.0 | 3.0 | 12 | 88 | × | × | × | Comparative Example |
| 43 | 99.70 | 0.20 | 0.00 | 0.10 | $N_2$+5%$H_2$ | 4.0 | 99.70 | 0.20 | 0.00 | 0.10 | yes | no | - | - | - | - | × | × | × | Comparative Example |
| 44 | 97.95 | 1.50 | 0.45 | 0.10 | $N_2$+5%$H_2$ | 2.5 | 97.95 | 1.50 | 0.45 | 0.10 | yes | yes | 14.5 | 3.9 | 22 | 78 | △ | △ | △ | Comparative Example |
| 45 | 95.20 | 1.50 | 3.20 | 0.10 | $N_2$+5%$H_2$ | 4.0 | 95.20 | 1.50 | 3.20 | 0.10 | yes | yes | 10.0 | 8.5 | 97 | 3 | × | △ | × | Comparative Example |
| 46 | 93.40 | 1.50 | 5.00 | 0.10 | $N_2$+5%$H_2$ | 4.0 | 93.40 | 1.50 | 5.00 | 0.10 | no | yes | - | - | - | - | × | × | × | Comparative Example |
| 47 | 95.20 | 1.50 | 3.20 | 0.10 | $N_2$+5%$H_2$ | 17.0 | 95.20 | 1.50 | 3.20 | 0.10 | yes | yes | 4.0 | 7.2 | 75 | 25 | × | △ | × | Comparative Example |

Underlined: indicates value outside scope of present disclosure.

As indicated in Table 1, examples that satisfy the requirements of the present disclosure exhibited excellent blistering corrosion resistance and appearance-related corrosion resistance at painted cut portions, as well as excellent lapped flat-sheet portion corrosion resistance. Further, examples in which the area fraction of the Zn-Al-$MgZn_2$ ternary eutectic alloy microstructure was 30 area% or more, and the area fraction of the single-phase Zn microstructure was 70 area% or less, had excellent appearance-related corrosion resistance of painted cut portions. In contrast, examples that did not satisfy the requirements of the present disclosure were inferior in at least one of the following: blistering corrosion resistance of painted cut portions, appearance-related corrosion resistance of painted cut portions, or lapped flat-sheet portion corrosion resistance.

INDUSTRIAL APPLICABILITY

According to the present disclosure, it is possible to provide a Zn-Al-Mg coated steel sheet that exhibits excellent blistering corrosion resistance and appearance-related corrosion resistance at painted cut portions, as well as excellent lapped flat-sheet portion corrosion resistance, even in corrosion environments where the temperature changes greatly from freezing and below to high temperatures (50 °C and above).

REFERENCE SIGNS LIST

- 10 single-phase Zn microstructure
- 20 Zn-Al-$MgZn_2$ ternary eutectic alloy structure
- r circle equivalent radius of single-phase Zn microstructure
- d1 width of Zn-Al-$MgZn_2$ ternary eutectic alloy microstructure
- d2 width of Zn-Al-$MgZn_2$ ternary eutectic alloy microstructure
- d3 width of Zn-Al-$MgZn_2$ ternary eutectic alloy microstructure
- d4 width of Zn-Al-$MgZn_2$ ternary eutectic alloy microstructure

**Claims**

1. A Zn-Al-Mg coated steel sheet comprising a base steel sheet and a coated layer formed on at least one side of the base steel sheet,

   wherein the coated layer has a chemical composition, in mass%, containing Al: 0.10 % to 3.00 %, Mg: 0.50 % to 3.00 %, and Fe: 0.30 % or less, with the balance being Zn and inevitable impurities,
   and wherein, in a reflected electron image obtained by irradiating a surface of the coated layer with an electron beam using a scanning electron microscope, (I) single-phase Zn microstructures exist as islands within a matrix of Zn-Al-$MgZn_2$ ternary eutectic alloy microstructure, (II) a circle equivalent average radius $r_{ave}$ of the single-phase Zn microstructures is 6.0 μm or more and 14.0 μm or less, and (III) an average width $d_{ave}$ of the Zn-Al-$MgZn_2$ ternary eutectic alloy microstructure located between adjacent single-phase Zn microstructures is 4.0 μm or more and 6.0 μm or less.

2. The Zn-Al-Mg coated steel sheet according to claim 1, wherein, in the reflected electron image, the Zn-Al-$MgZn_2$ ternary eutectic alloy microstructure is 30 area% or more, and the single-phase Zn microstructure is 70 area% or less.

FIG. 1

10
20
10 μm

FIG. 2

r
10µm JEOL 2022/10/11
x800 15.0kV COMPO SEM WD 15.1mm 09:26:57

FIG. 3

d2
d1
d4
d3
10μm JEOL 2022/10/11
x800 15.0kV COMPO SEM WD 15.1mm 09:26:57

## INTERNATIONAL SEARCH REPORT

International application No.
**PCT/JP2024/044860**

**A. CLASSIFICATION OF SUBJECT MATTER**

***C23C 2/06***(2006.01)i; ***C22C 18/00***(2006.01)i; ***C22C 18/04***(2006.01)i; ***C22F 1/00***(2006.01)i; ***C22F 1/16***(2006.01)i; ***C23C 2/20***(2006.01)i; ***C23C 2/26***(2006.01)i
FI: C23C2/06; C22C18/00; C22C18/04; C22F1/00 613; C22F1/00 627; C22F1/00 631A; C22F1/00 631Z; C22F1/00 640A; C22F1/00 673; C22F1/00 692A; C22F1/00 692B; C22F1/00 692Z; C22F1/16 B; C23C2/20; C23C2/26

According to International Patent Classification (IPC) or to both national classification and IPC

**B. FIELDS SEARCHED**

Minimum documentation searched (classification system followed by classification symbols)

C23C2/00-2/40

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2024-500435 A (POSCO CO., LTD.) 09 January 2024 (2024-01-09) claims, examples | 1-2 |
| A | JP 2023-27518 A (JFE STEEL CORPORATION) 02 March 2023 (2023-03-02) claims, examples | 1-2 |
| A | JP 2021-508777 A (POSCO) 11 March 2021 (2021-03-11) claims, examples | 1-2 |
| A | KR 10-2019-0078330 A (POSCO) 04 July 2019 (2019-07-04) claims, examples | 1-2 |
| A | CN 104498850 A (CHINA IRON & STEEL RESEARCH INSTITUTE GROUP) 08 April 2015 (2015-04-08) claims, examples | 1-2 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 March 2025** | **18 March 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/044860**

| Patent document cited in search report | Publication date (day/month/year) | Patent family member(s) | Publication date (day/month/year) |
|---|---|---|---|
| JP 2024-500435 A | 09 January 2024 | EP 4265812 A1<br>claims, examples<br>US 2024/0052471 A1<br>WO 2022/139367 A1<br>CN 116670317 A<br>KR 10-2022-0089293 A | |
| JP 2023-27518 A | 02 March 2023 | (Family: none) | |
| JP 2021-508777 A | 11 March 2021 | EP 3733921 A1<br>claims, examples<br>US 2021/0010123 A1<br>WO 2019/132337 A1<br>CN 111542640 A<br>KR 10-2019-0078435 A | |
| KR 10-2019-0078330 A | 04 July 2019 | (Family: none) | |
| CN 104498850 A | 08 April 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014501334 A
- JP 2023074874 A
- JP 2021195564 A